# EUROPÄISCHE PATENTSCHRIFT

(11) **EP 1 784 351 B1**
(45) Veröffentlichungstag und Bekanntmachung des Hinweises auf die Patenterteilung: **22.02.2012**
(21) Anmeldenummer: 05789538.5
(22) Anmeldetag: 24.08.2005
(51) Int. Cl.: B65H 31/30, B65G 47/08, B65G 47/90

(54) **FÖRDEREINRICHTUNG UND VERFAHREN ZUR ÜBERFÜHRUNG VON BLATTLAGEN AUF EINEN ABTRANSPORTFÖRDERER**
CONVEYING DEVICE AND METHOD FOR TRANSFERRING SHEET LAYERS TO A TRANSPORT CONVEYOR
CONVOYEUR ET PROCEDE POUR TRANSFERER DES COUCHES DE FEUILLES SUR UN CONVOYEUR DE TRANSPORT

(30) Priorität: 31.08.2004 DE 102004042899
(43) Veröffentlichungstag der Anmeldung: 16.05.2007
(73) Patentinhaber: bielomatik Leuze GmbH + Co. KG, 72639 Neuffen (DE)
(72) Erfinder: KLEIN, Hansjörg, 73773 Aichwald (DE); MEYER, Axel, 72574 Bad Urach (DE)
(74) Vertreter: Thul, Hermann
(86) Internationale Anmeldenummer: PCT/EP2005/009122
(87) Internationale Veröffentlichungsnummer: WO 2006/024437

(56) Entgegenhaltungen:
- EP-A- 0 465 916
- EP-A- 0 514 783
- EP-A- 1 348 651
- DE-A1- 10 141 964
- US-A- 4 765 790
- US-A- 5 096 370

## Beschreibung

### Anwendungsgebiet und Stand der Technik

Die Erfindung betrifft eine Fördereinrichtung für durch Blattlagen gebildete Stapel aus Flachmaterialien, wie Papier oder dgl. und ein Verfahren zur Überführung derartiger Stapel zwischen einer Antransportstation und einem Abtransportförderer.

Die EP 465 916 A1 und die EP 1 348 651 A beschreiben derartige Fördereinrichtungen. Sie werden als Teile von Anlagen eingesetzt, in denen aus Rollenpapier Stapel in Reihen nebeneinander gebildet werden, beispielsweise in sog. Kleinformat-Querschneidern, die aus Papierbahnen Stapel von Gebrauchsformatblättern herstellen, beispielsweise Kopierpapier-Packungen. Die in einer Reihe nebeneinander (sog. Nutzen) ankommenden Stapel werden in der Fördereinrichtung auf Abtransportförderer übergeben, die quer zur Antransportrichtung, d.h. der Papierlaufrichtung in der Maschine, laufen. Dort werden die einzelnen Reihen aneinander angeschlossen, damit die einzelnen Stapel auf einen vorgegebenen Abstand vereinzelt werden können, um in daran angeschlossenen Packmaschinen verpackt zu werden.

Die genannten Schriften beschreiben solche Einrichtungen, die in der Abtransportstation zwei im wesentlichen parallel zueinander verlaufende Abtransportförderstrecken hat, auf die die Stapelreihen wahlweise abgelegt werden können. Dies hat beim Normalbetrieb den Vorteil, dass der meist sehr große Ausstoß der Stapel-Herstellungsmaschine auf mehrere Verpackungsstrecken verteilt werden kann. Ferner ergibt sich die Möglichkeit, bei Störungen oder Ausfall in einer der Verpackungsstrecken wahlweise nur eine der Abtransportförderstrecken zu beschicken, ohne die Maschine stillsetzen zu müssen.

Die EP 514 783 beschreibt, aufbauend auf diesem Prinzip, eine mittige Teilung der Greiferreihe, die die Stapelreihe erfasst, so dass jeweils ein Teil der Stapelreihe auf jeder der beiden Abtransportstrecken abgelegt werden kann.

### Aufgabe und Lösung

Die Erfindung bezweckt, die Fördereinrichtung und das Verfahren der eingangs beschriebenen Art weiter zu verbessern und insbesondere bei weiter gesteigerter Flexibilität der Arbeitsweise durch die Übergabe bedingte Totzeiten zu vermeiden und einen störungsfreien Ablauf der Übergabe auch bei hohen Arbeitsgeschwindigkeiten sicherzustellen.

Diese Aufgabe wird durch die Ansprüche 1, 9 und 10 gelöst.

Es sind zwei gesonderte Übergabeförderer vorgesehen, die beide für jeden Stapel der gesamten Stapelreihe je einen Greifer haben. Der erste Übergabeförderer ist hauptsächlich dazu bestimmt, die gesamte Stapelreihe von der Antransportstation, also den Sammelboxen, in denen sich die Stapel gebildet haben, bis zur ersten Abtransportförderstrecke zu ziehen und sie dort abzulegen. Dann kann beispielsweise durch Inbetriebnahme eines ersten Teils der vorzugsweise im Übergabebereich mittig geteilten Abtransportförderstrecke eine Hälfte der Stapelreihe in Richtung auf die Packmaschinen zu abtransportiert werden, während der zweite Übergabeförderer die dann nicht abtransportierten Stapel ergreift und diesen auf die zweite Abtransportförderstrecke zieht. Von dort können sie dann auf dieser Förderstrecke auf die daran angeschlossene zweite Packmaschine zu transportiert werden.

Um das Ergreifen der auf der ersten Abtransportförderstrecke liegenden Stapel durch den zweiten Übergabeförderer zu erleichtern, wird die Stapelreihe auf der ersten Abtransportförderstrecke so abgelegt, dass die zur zweiten Abtransportförderstrecke weisende Kante etwas über das Haupt-Förderband der ersten Abtransportförderstrecke übersteht. Der Greifer kann den Stapel nun auch von unten ergreifen und festhalten. Um, insbesondere bei sehr weichen und empfindlichen Papieren, Beschädigungen zu vermeiden, kann in den Bereich dieses Überstandes ein zusätzliches schmales Neben-Förderband vorgesehen sein, das abgesenkt wird, wenn der zweite Übergabeförderer mit seinen Greifern sich dem Stapel nähert, ggf. auch schon beim Ablegen.

Die Übergabeförderer benötigen nur je einen Greifer je Stapel und brauchen vorteilhaft nur jeweils über zwei Stationen zu reichen, nämlich von der Antransportstation bis zur ersten Abtransportförderstrecke bzw. von dieser bis zur zweiten Abtransportförderstrecke. Sie können daher relativ einfach und im wesentlichen auch baugleich ausgebildet sein, so dass sie leichter herzustellen und zu warten sind. Es ist auch möglich, eine Maschine, die nur mit einer Abtransportförderstrecke vorgesehen war, auf die bei der Erfindung vorgesehene Zwillingsausführung bezüglich der Förderstrecke (Twin-Auslauf) durch Nachrüstung im Baukastensystem umzustellen. Es ist aber auch möglich, die eine der beiden Förderstrecken über alle drei Stationen reichen zu lassen, so dass im Falle einer ausschließlich Nutzung der maschinenferneren Abtransportförderstrecke diese ohne Zwischenablage erfolgen kann.

Meist werden bei einem solchen Twin-Auslauf beide Förderstrecken parallel zueinander in die gleiche Richtung weisen, so dass die Grundform der Maschine die eines L mit zwei parallelen Schenkeln hat. Es ist aber auch möglich, auf diese Weise eine T-Konfiguration herzustellen, die allerdings mehr Platz erfordert.

Es wird also bevorzugt eine Fördereinrichtung zur Übergabe von Stapelreihen oder Großtakten aus Blattstapeln aus der Stapelstation einer Papierverarbeitungsmaschine, beispielsweise eines Kleinformat-Querschneiders, auf mehrere parallel zueinander verlaufende Abtransportbänder geschaffen. Dazu sind zwei in Übergaberichtung und in ihrer Höhe gegeneinander versetzte, im übrigen aber weitgehend gleiche Übergabeförderer vorgesehen, die je eine Reihe von Greifern oder Zangen, d.h. je eine Zange je Stapelposition, aufweisen. Dabei reicht der erste Übergabeförderer von der Stapelstation bis zum ersten Abtransportband und der zweite Übergabeförderer von diesem bis zum zweiten Abtransportband. Der erste Querförderer zieht die gesamte Stapelreihe bis zum ersten Abtransportband, wo ein Teil der Stapelreihe quer abtransportiert wird, während der andere Teilstapel vom zweiten Übergabeförderer ergriffen und auf das zweite Abtransportband transportiert wird.

Vorteilhaft wird bei einer Fördereinrichtung für durch Blattlagen gebildete Papierstapel mit einer Antransportstation, in der mehrere Stapel in einer Stapelreihe in nebeneinanderliegenden Stapelpositionen zur Übergabe bereitgestellt werden, mit einem Abtransportförderer, der wenigstens eine im Wesentlichen quer zu einer Übergaberichtung verlaufende Abtransportförderstrecke aufweist, mit einer Übergabestation, die Übergabepositionen an der wenigstens einen Abtransportförderstrecke aufweist, sowie mit wenigstens einem Übergabeförderer mit Greifern, die zum Ergreifen und Freigeben der Stapel betätigbar sind und in der Übergabestation bewegbar sind, vorgesehen, dass zwischen der Antransportstation und der Abtransportförderstrecke und/oder zwischen zwei benachbarten Abtransportförderstrecken wenigstens eine Zwischenablagestation vorgesehen ist, an der ein oder mehrere Stapel zwischenlagerbar sind. Die wenigstens eine Zwischenablagestation ist im Bewegungsbereich des wenigstens einen Übergabeförderers und damit im Bereich der Übergabestation angeordnet. Durch die wenigstens eine Zwischenablagestation ist es möglich, insbesondere mittels wenigstens zwei Übergabeförderern einen schnellen Abtransport der Blattstapel von der Antransportstation zu ermöglichen. Dies ist insbesondere vorteilhaft, wenn bei mehreren Abtransport-Förderstrecken eine oder mehrere ausgefallen sind. Vorzugsweise erstreckt sich die Zwischenablagestation über die gesamte Nutzenbreite der Antransportstation. Somit ist es möglich, eine über die volle Nutzenbreite erstreckte Stapelreihe, d.h. eine der Nutzenanzahl entsprechende Anzahl von Stapeln, an der Zwischenablagestation zwischenzulagern. Wahlweise können selbstverständlich auch weniger Stapel zwischengelagert werden. Es ist auch möglich, die Zwischenablagestation lediglich über einen Teil der Nutzenbreite der Antransportstation zu erstrecken. Durch diese erfindungsgemäße Lösung ist es möglich, entsprechende Verpackungslinien mit möglichst hoher Effizienz zu beschicken und eine hohe Effizienz auch beizubehalten, wenn vorübergehend eine Verpackungslinie ausfällt. Insbesondere wird durch die zuvor beschriebene Lösung vermieden, dass Blattstapel, die auch als Riese bezeichnet werden, ausgeschleust werden müssen. So ist es möglich, eine gesamte, über die Nutzenbreite erstreckte Stapelreihe, die auch als Großtakt bezeichnet wird, an der Zwischenablagestation zu parken. Dadurch ist es möglich, auch einen nichtsynchronen Ablauf zwischen dem Großtakttransport der Greifer und der Abtransportförderstrecken zuzulassen. Die Anzahl von parallel hintereinander angeordneten Zwischenablagestationen richtet sich insbesondere nach der Anzahl der an die Sammelstation anschließenden Abtransportförderstrecken und Verpackungslinien sowie nach der Geschwindigkeit der an der Antransportstation einlaufenden Großtakte, um gemeinsam mit den Zwischenablagestationen insgesamt wieder eine phasensynchrone Überführung der Riese von der Antransportstation zu den Abtransportförderstrecken und damit zu den Verpackungslinien zu ermöglichen.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischenüberschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen in zahlreichen aufeinander folgenden Arbeitsschritten dargestellt, wobei die mit zusätzlichen Buchstabenindizes (a, b) gekennzeichneten Figuren jeweils andere Ansichten des gleichen Arbeitsschrittes sind. Dementsprechend zeigen.
- Fig. 1 bis 5: jeweils in schematischer Draufsicht bzw. schematischer Ansicht von links gesehen, die Fördereinrichtung und ihre Arbeitsweise im normalen, beide Abtransportförderstrecken beschickenden Betrieb (Twin-Betrieb),
- Fig. 6 bis 8: in gleicher Darstellungsweise die Fördereinrichtung bei Beschickung nur der ersten Abtransportförderstrecke,
- Fig. 9 bis 13: die Beschickung nur der zweiten Abtransport-Förderstrecke,
- Fig. 14 bis 16: eine Darstellung des Abtransports nur auf der zweiten Abtransportförderstrecke ohne Zwischenablage -,
- Fig. 17: eine schematische Seitenansicht der Papier-Verarbeitungsmaschine, die die Förderein- richtung enthält,
- Fig. 18 bis 20: eine weitere Fördereinrichtung ähnlich der zuvor angeführten Fördereinrichtung mit einer zusätzlichen Zwischenablagestation und
- Fig. 21a bis 21f: in schematischer Draufsicht verschiedene Förderzustände der Fördereinrichtung nach den Fig. 18 bis 20.

### Beschreibung eines bevorzugten Ausführungsbeispiels

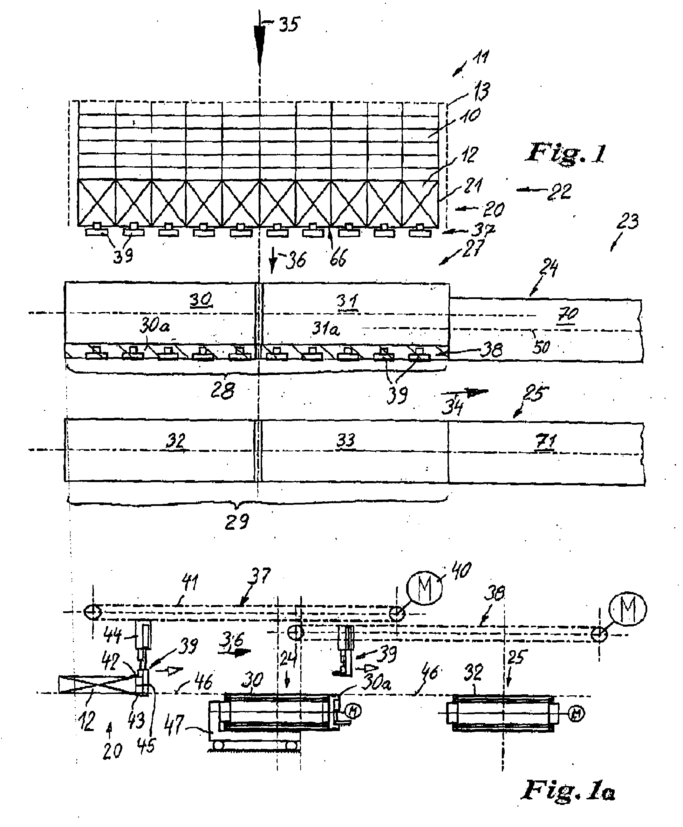

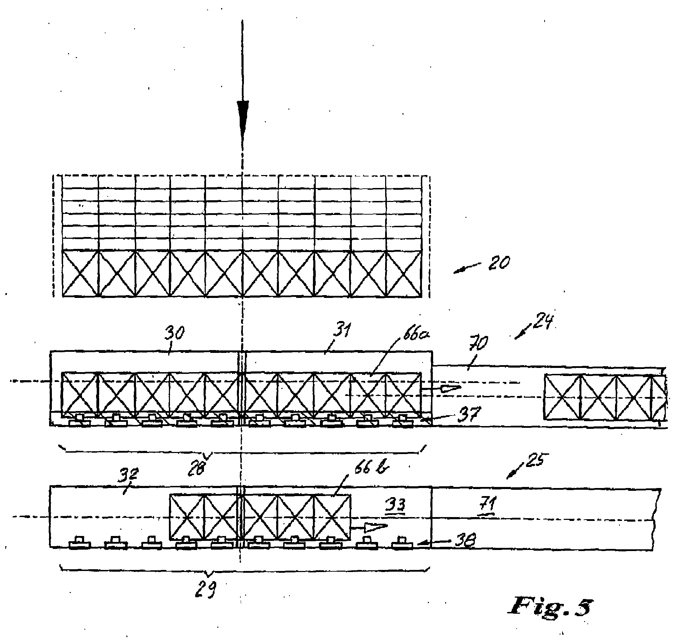

Die Figuren 1 bis 5 inklusive der Seitenansichten 1 a, 2a, 2b, 3a und 4a zeigen in stark schematisierter Darstellungsweise eine Fördereinrichtung 11 für aus Blattlagen gebildete Stapel 12. Die Fördereinrichtung ist nahe dem Ende einer Papierverarbeitungsmaschine 13 angeordnet.

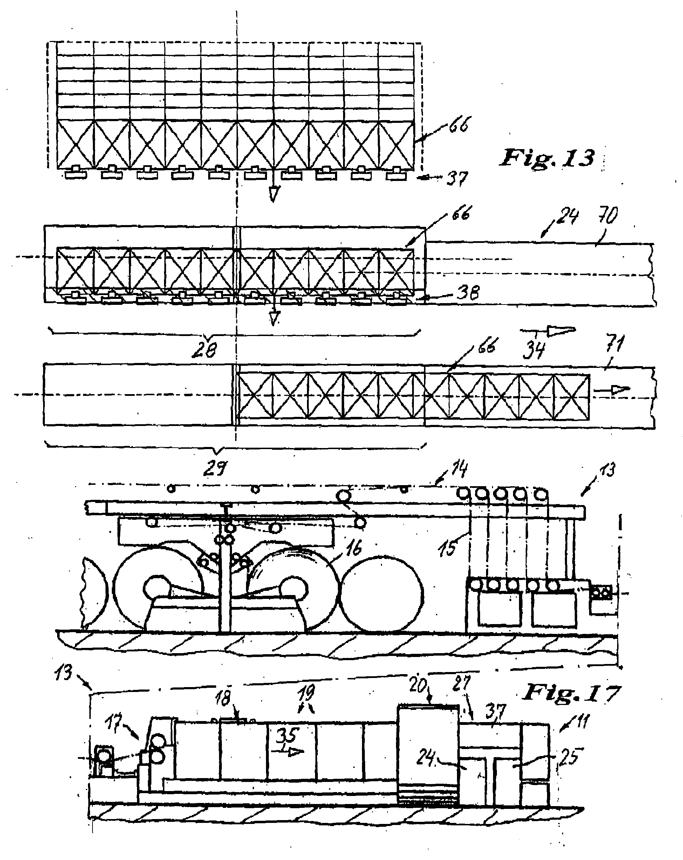

Die Papierverarbeitungsmaschine 13 ist in Fig. 17 mit ihren wesentlichsten Aggregaten gezeigt. Beim Ausführungsbeispiel handelt es sich um einen Kleinformat-Querschneider, der Abrollungen 14 für fünf Papierbahnen 15 enthält, die jeweils von einer großen Papierrolle 16 abgezogen und übereinanderliegend gemeinsam bearbeitet werden. Ein Längsschneider 17 schneidet die Papierbahnen 15 abfallfrei in formathaltige Längsstreifen, die dann mit einem Querschneider 18 auf das entsprechende Format, z.B. DIN A4, geschnitten und in weiteren Stationen 19 in einen geschuppten Bogenstrom (10) überführt, geprüft, durch Ausschleusung von fehlerhaften Bögen getrennt und schließlich in einer Stapelstation 20 zu Blattstapeln der gewünschten Zahl (z.B. 500 Blatt) gesammelt werden.

Entsprechend der Zahl der Nutzen, d.h. der nebeneinanderliegenden Stapel (im vorliegenden Beispiel zehn), die aus einer Papierbahnbreite geschnitten werden, bilden sich also in der Stapelstation 20 zahlreiche Stapel 12, die in einer Stapelreihe 66 nebeneinander in entsprechenden Stapelpositionen 21, d.h. Fächern, in denen die Stapelbildung stattfindet, liegen.

Die Stapelstation mit der Reihe von nebeneinanderliegenden Stapelpositionen 21 bildet also eine Antransportstation 22 für die Fördereinrichtung 11. Diese dient zur Übergabe der Stapel 12 auf einen Abtransportförderer 23, der zwei Abtransportförderstrecken 24, 25 aufweist, die beim Ausführungsbeispiel quer zur Bogenstromrichtung 35 (Antransportrichtung) und parallel zueinander in eine Richtung weisen, in den Figuren jeweils nach rechts (in Bogenstromrichtung 35 nach links). Die Abtransportförderstrecken 24, 25 erstrecken sich also zur gleichen Seite. An ihr Ende ist je eine nicht dargestellte Verpackungseinrichtung für die Stapel vorgesehen. Der Abtransportförderer besteht aus jeweils mehreren von nicht dargestellten Antrieben, beispielsweise steuerbaren Elektromotoren, angetriebenen Bandförderern.
Der zweibahnige Abtransportförderer 23 reicht in eine Übergabestation 27 hinein. Er hat im Bereich der Übergabestation Übergabepositionen 28, 29 auf den beiden Förderstrecken 24, 25. Fig. 1 zeigt, dass diese in zwei unabhängig voneinander antreibbare Teilförderstrecken 30, 31, 32, 33, im dargestellten Beispiel jeweils mittig, aufgeteilt sind. Anschließend an diese Teilförderstrecken sind als weiterführende Förderstrecken Transportbänder 70, 71 zum Weitertransport in Abtransportrichtung 34 vorgesehen. Diese Transportbänder werden auch als Stauförderer bezeichnet; weil sie so steuerbar sind, dass sie die auf ihnen transportierten Stapelreihen dicht aneinander anschließen lassen, indem die nachfolgenden schneller transportiert werden und auf die vorigen auflaufen.

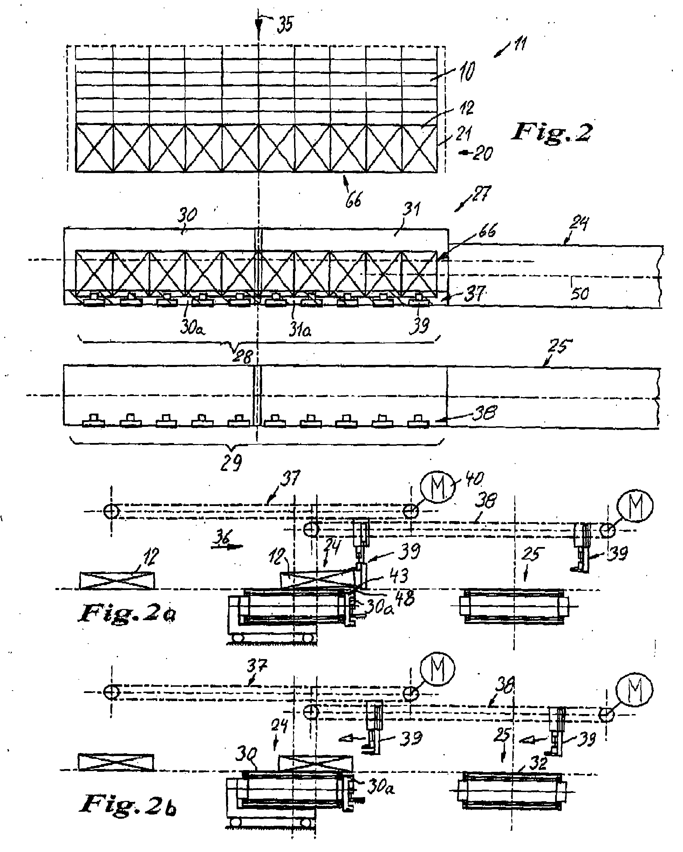

In der Übergabestation 27 sind zwei Übergabeförderer 37, 38 vorgesehen, die je für jede Stapelposition 21 einen Greifer 39 haben (Fig. 2). Die Greifer sind in Übergaberichtung 36, die mit der Antransportrichtung 35 übereinstimmt, beweglich, was auf beliebige Weise, jeweils von einem Antrieb 40 gesteuert, erfolgen kann. In Fig. 1a ist der Greiferantrieb des Übergabeförderers als umlaufende Kette 41 oder Zahnriemen dargestellt, die über der Übergabeposition verläuft. Die Greifer haben jeweils einen oberen und einen unteren Greiferfinger 42, 43, die gegeneinander und gemeinsam mittels eines Antriebes 44 vertikal bewegbar sind.

Die beiden Übergabeförderer 37, 38 sind, wie aus Fig. 1 zu erkennen ist, bezüglich Aufbau und Länge des Förderweges identisch. Sie sind lediglich in der Höhe versetzt. Der erste Übergabeförderer 37 reicht mit seinen von den Greifern bestrichenen Bereich von den Stapelpositionen 21, wo er die Stapel 12 an ihrer Vorderkante 45 mittig fasst, bis über die erste Abtransportfördererstrecke 24, d.h. die Übergabeposition 28 hinweg, so dass er den Stapel darauf ablegen kann.

Der diesen etwas überlappende und im dargestellten Beispiel niedriger angeordnete zweite Übergabeförderer 38 reicht von der ersten Abtransportförderstrecke bis zur zweiten, von der Maschine 13 weiter entfernten Abtransportförderstrecke 25, um einen Stapel dort ablegen zu können. Die Greifer 39 sind so ausgebildet, dass sie die Stapel mittig an der Vorderkante zwischen zwei Greiferfingern 42, 43 ergreifen; es könnten jedoch auch, je nach Art der zu transportierenden Stapel, mehrere Finger vorgesehen sein.

Die Teilförderer 30, 31 sind unabhängig voneinander und von dem Transportband 70 antreibbare Förderbänder, auf deren Obertrum sich die Übergabepositionen 28, 29 bilden. Fig. 1 und 1a zeigen, dass die Teilförderer 30, 31 von seitlichen Nebenförderbändern 30a, 31 a flankiert werden, die synchron mit den Hauptförderbändern 30, 31 antreibbar sind. Sie sind jedoch gegenüber den Hauptförderbändern 30, 31 zumindest mit ihrem Obertrum absenkbar, d.h. unter die in Fig. 1a strichpunktiert angedeutete Übergabeförderebene 46, die durch einen die Stapelstation und die Übergabestationen verbindenden glatten Tisch gebildet sind, der im einzelnen nicht dargestellt ist. Er hat Aussparungen für die unteren Greiferfinger 43.

Außerdem ist die erste Abtransportförderstrecke 24 im Bereich der Übergabeposition 28 in Übergaberichtung 36 horizontal verschiebbar, und zwar zur Anpassung an unterschiedliche Stapelformate, d.h. deren Länge in Übergaberichtung 36. Dies ist in Fig. 1a durch einen Rollenschlitten 47 gezeigt.

Die Teilförderer 32, 33 im Bereich der Übergabeposition 29 der zweiten Abtransportförderstrecke 25 sind ohne Nebenförderbänder ausgebildet.

Bezüglich Details und Funktion der Papierverarbeitungsmaschine und ihres Zusammenwirkens mit der hier beschriebenen Fördereinrichtung im allgemeinen wird zum Zwecke der Offenbarung ausdrücklich auf die EP 0 465 916 A1 und EP 1 348 651 A2 (entsprechend US-Patent 5.511.935 und US-Publikation US 2003-0183486) Bezug genommen.

### Verfahrensbeschreibung

Nach dem Durchlaufen der in Fig. 17 gezeigten Maschine kommt der geschuppte Bogenstrom 10 in Antransport- bzw. Bogenstromrichtung 35 an der Stapelstation 20 an und wird dort in den Stapelpositionen bzw. Stapelboxen 21 zu Stapeln gesammelt, und zwar hier zehnnutzig, d.h. es entsteht eine aus zehn nebeneinanderliegenden Stapeln bestehende Stapelreihe 66. Wenn diese fertig ist, wird, ggf. nach Ziehen einer Lücke im Bogenstrom, die gesamte Stapelreihe 66 jeweils an ihrer Vorderkante 45 von den Greifern 39 des ersten Übergabeförderers 37 ergriffen. Die Stapelreihe 66 wird dann horizontal in Übergaberichtung 36 auf der Übergabeförderebene (Übergabetisch) 46 in die Übergabeposition 28 auf den beiden Teilförderern 30, 31 gezogen (Fig. 2, 2a). Danach wird der Greifer 39 geöffnet, fährt nach oben (Fig. 2b) und kann dann bereits über die Stapelreihe 66 hinweg in Richtung auf eine neue Stapelreihe, d.h. entgegen der Übergaberichtung 36, zurückfahren.

Die Figuren 2a und 2b zeigen, dass die Nebenförderer 30a, 31 a vor dem Ablegen der Stapel 12 durch die Greifer 39 so abgesenkt werden, dass ihr Obertrum 48 etwas unterhalb der Übergabeförderebene 46 und damit auch unterhalb der Obertrums der Hauptförderbänder 30, 31 liegt. Dadurch kann der Greifer 39 soweit abgesenkt werden, dass der untere Finger 43 in der Übergabeförderebene 46 liegt und er somit den Stapel glatt und ohne Verrutschen absetzt. Dabei wird der Stapel soweit gezogen, dass die Vorderkante 45 gerade noch auf dem Nebenförderer 30a, 31 a liegt. Sie steht also über die Seitenkante des Hauptförderbandes 30, 31 über (Fig. 2b).

Die Förderband-Gruppe 30-33, 30a und 30b ist dabei entsprechend dem Bogen-Format so eingestellt, dass die Ablage mittig zur Packlinie, d.h. zur Mittellinie 50 des Transportbandes 70, erfolgt.

Während dieser Zeit standen die Greifer 39 des zweiten Übergabeförderers 38 in Warteposition hinter der Außenkante der zweiten Abtransportförderstrecke 25. In Fig. 2b ist gezeigt, dass sie sich schon in Richtung auf die erste Abtransportförderstrecke 24 zu in Bewegung gesetzt haben.

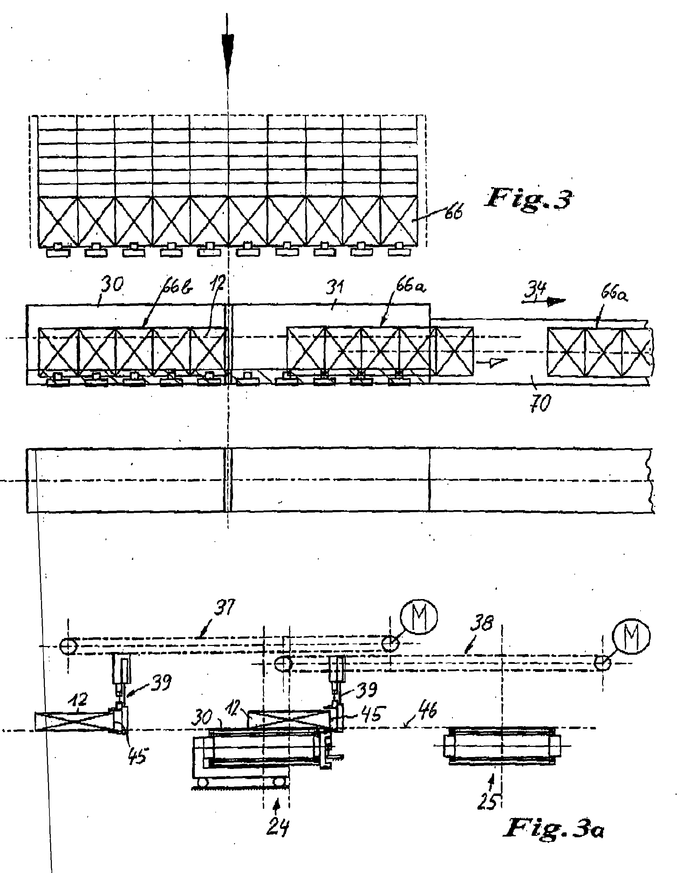

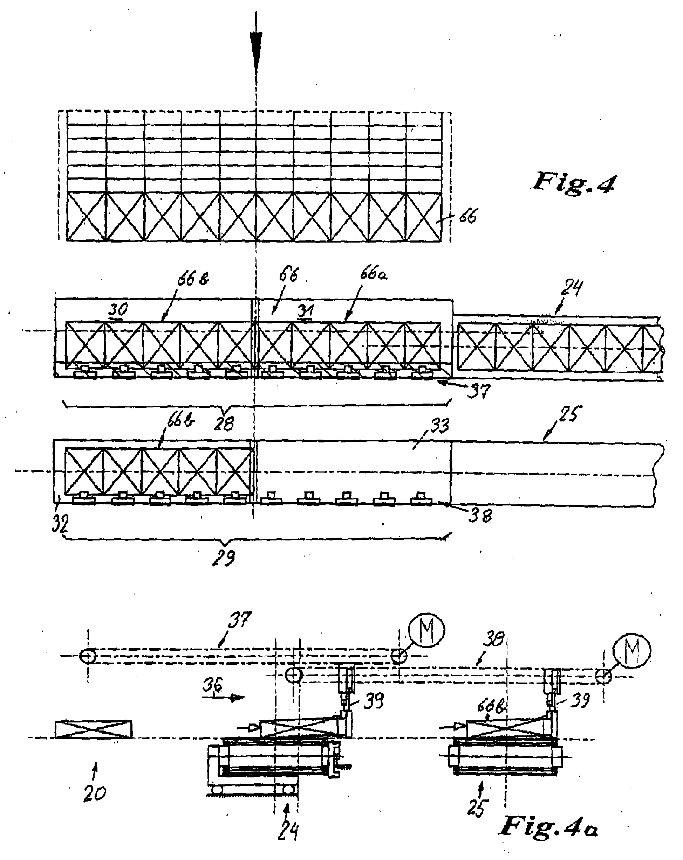

Fig. 3 zeigt, dass der Teilförderer 31 der ersten Abtransportförderstrecke 24 in Abtransportrichtung 34 angefahren wurde, so dass eine erste Hälfte 66a der Stapelreihe 66 auf das Transportband 70 (Stauförderer) gefördert wurde, wo sie sich an die vorher ggf. schon darauf befindliche Teilstapelreihe 66a anschließt (s. hierzu Fig. 4).

Aus Fig. 3a ist zu erkennen, dass die Greifer 39 des zweiten Übergabeförderers 38 im Bereich der Vorderkante 45 der Stapel 12 die aus fünf Teilstapeln gebildete Teilstapelreihe 66b umgreifen, während der Greifer 39 des ersten Abgabeförderers 37 schon wieder in seine Greifposition an der Stapelstation 66 gefahren ist. Ggf. kann sich der Querab-Transport der Teilstapelreihe 66a auch noch fortsetzen, wenn der zweite Übergabeförderer 38 schon die Teilstapelreihe 66b ergriffen hat, wenn die zur Teilstapelreihe 66a gehörenden Greifer dabei offen bleiben. Dabei sind die Greifer 39 soweit anhebbar, dass sie beim Rücklauf über die Stapel hinweg fahren können.

Danach werden beide Greifer geschlossen und fahren, wie Fig. 4 und 4a zeigt, in Übergaberichtung 36. Dabei legen die Greifer 39 des zweiten Übergabeförderers 38 die Teilstapelreihe 66a auf dem Teilförderer 32 der zweiten Abtransportförderstrecke 25 ab und die Greifer 39 des ersten Übergabeförderers 37 transportieren, wie schon anhand von Fig. 1 und 2 beschrieben, eine neue Gesamtstapelreihe 66 in die richtige Position auf den ersten Abtransportförderer 24.

Anschließend werden alle Greifer geöffnet und ggf. in eine unwirksame Position gefahren. Die zweite Teilstapelreihe 66b wird auf der Abtransportförderstrecke 25 in Abtransportrichtung 34 aus der Übergabeposition 29 verfahren, indem die Teilförderer 32, 33 gleichsinnig angetrieben werden und auch der erste Teilstapel 66a des folgenden "Großtaktes" (gesamte Stapelreihe 66) kann, wie in Fig. 3 gezeigt, auf das Transportband 70 transportiert werden.

Es ist also zu erkennen, dass bei diesem Twin-Betrieb stets eine gesamte Stapelreihe 66 auf den Übergabebereich 28 der ersten Abtransportförderstrecke 24 gezogen wird, wobei sie, ggf. nach vorheriger Einstellung über den Rollenschlitten 47, unabhängig von dem Format des Stapels mit ihrer Vorderkante 45 um den vorbestimmten Betrag über die Seitenkante des jeweiligen Teilförderers 30, 31 überhängt, wobei sie ggf. auch, wie die Zeichnungen zeigen, außermittig zu den Teilförderbändern 30, 31, jedoch mittig zur Mittellinie 50 (Packlinie), liegt. Ein Teil 66a der Stapelreihe 66, meist die Hälfte, wird dann direkt auf der ersten Abtransportförderstrecke 24 abtransportiert und an die vor ihr laufenden Stapel angeschlossen, während die zweite Teilstapelreihe 66b auf dem Teilförderer 30 der ersten Abtransportförderstrecke zwischengelagert wird. Danach wird diese Teilstapelreihe 66b von dem zweiten Übergabeförderer 38 ergriffen und auf die zweite Abtransportförderstrecke 25 gezogen, von wo sie dann auch auf das zugehörige Transportband 71 transportiert wird.

Da sich die Arbeit auf zwei Übergabeförderer verteilt, die miteinander nie in Kollision kommen, weil sie sich weitgehend gleichsinnig, d.h. in der gleichen Richtung, bewegen, ist die Arbeitsweise besonders ruhig, aber schnell. Mit jeder der gleichsinnigen Hin- und Herbewegungen der Übergabegreifer wird eine gesamte Stapelreihe, ggf. mittig oder auch in einem bestimmten Verhältnis, geteilt, auf die beiden Abtransportstrecken gefördert, wobei jeder Greifer ungefähr nur den halben Weg zwischen den einzelnen Übergabestationen zurücklegen muss. Es sind auch keine Brücken zur Überbrückung der ersten Abtransportförderstrecke notwendig.

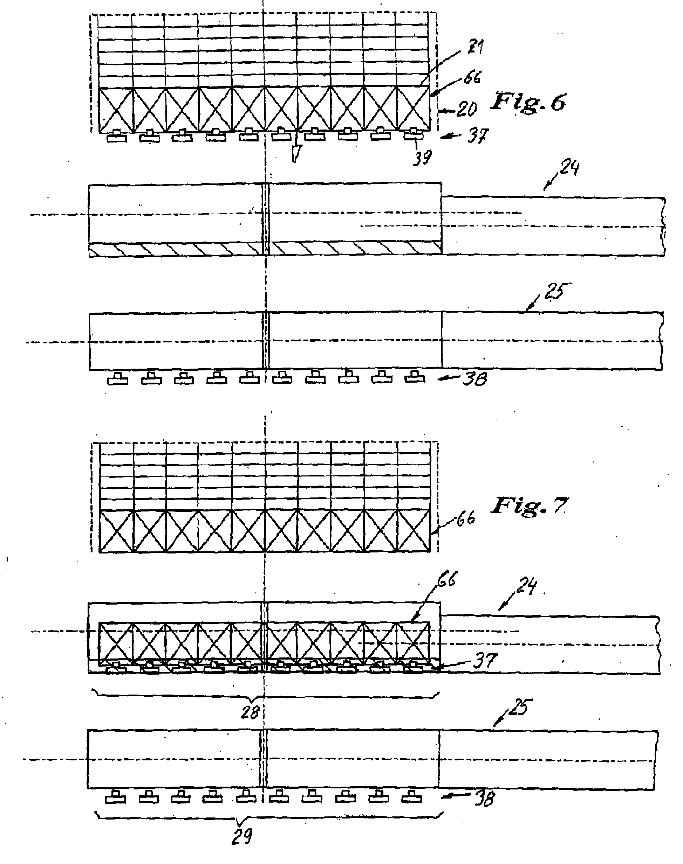

Die Fig. 6 bis 8 zeigen die im Sinne der Erfindung vorgesehene Arbeitsweise bei einer Störung, Stillsetzung oder einem anderen Stau auf der zweiten Abtransportförderstrecke 25, weil beispielsweise eine Verpackungsmaschine ausgefallen ist oder der Abtransport der Produkte nicht reibungslos erfolgt. Hierbei ist zu beachten, dass infolge der hohen Arbeitsgeschwindigkeit der Papierverarbeitungsmaschine 13, der hohen Nutzenzahl und der Zahl der gleichzeitig verarbeiteten Papierlagen der Strom der den Verpackungsmaschinen zugeführten Stapel in erheblicher Geschwindigkeit läuft, z.B. im Sekundentakt, teilweise bis zu 140 je Minute. Außerdem ist jeder Maschinenstop der Papierverarbeitungsmaschine nicht nur wegen der dadurch entstehenden Ausfallzeiten, sondern auch wegen erheblichen Personalaufwandes und Ausschusses beim Wiederanfahren unbedingt zu vermeiden. Dagegen ist eine vorübergehende Herabsetzung auf eine Maschinengeschwindigkeit, bei der eine einzelne Verpackungsmaschine den Produktausstoß verarbeiten kann, eher zu akzeptieren.

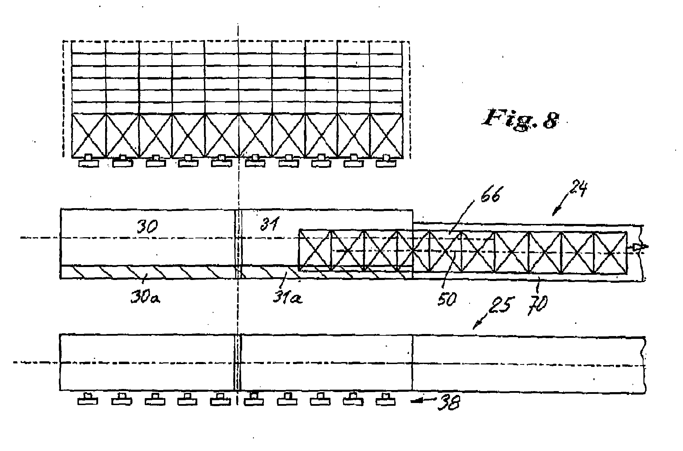

Fig. 6 zeigt, dass in diesem Falle die Greifer 39 des ersten Übergabeförderers 37 die gesamte Stapelreihe 66 erfaßt und (Fig. 7) auf die Übergabeposition 28 der ersten Abtransportförderstrecke 24 zieht, von wo die gesamte Stapelreihe 66, wie Fig. 8 zeigt, durch Ingangsetzung beider Teilförderer 30, 31 sowie der wieder hochgefahrenen zugehörigen Nebenförderbänder 30a und 31 a auf das Förderband 70 transportiert wird.

Der zweite Übergabeförderer 38 bleibt dabei unbetätigt. Es wird daher nur auf einem Kanal, d.h. der Abtransportförderstrecke 24, abtransportiert. Diese Einstellung kann auch verwendet werden, wenn an dem zweiten Übergabeförderer 38 eine Störung aufgetreten wäre oder die Maschine aus anderen Gründen so langsam läuft, dass eine der Verpackungsmaschinen die Gesamtleistung aufnehmen kann.

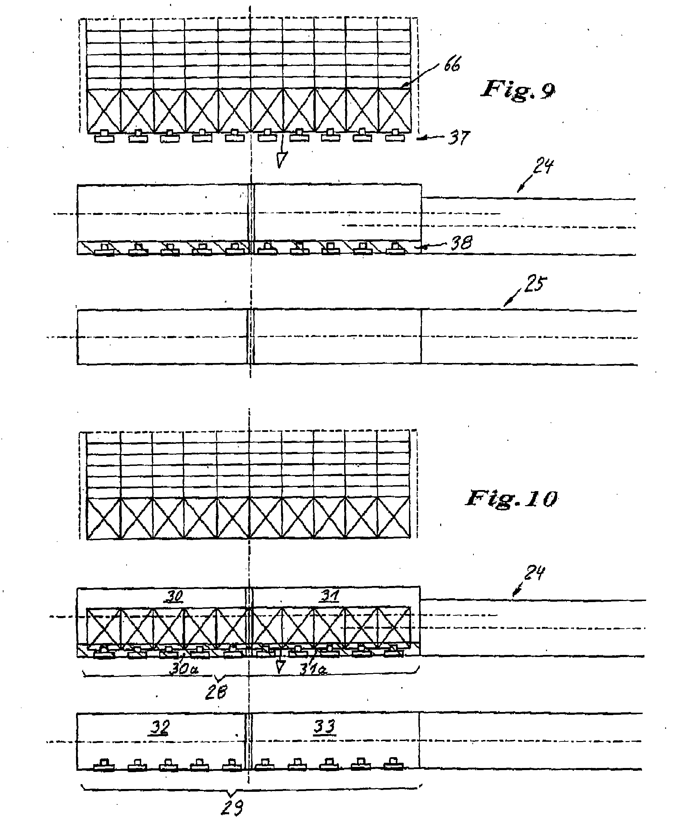

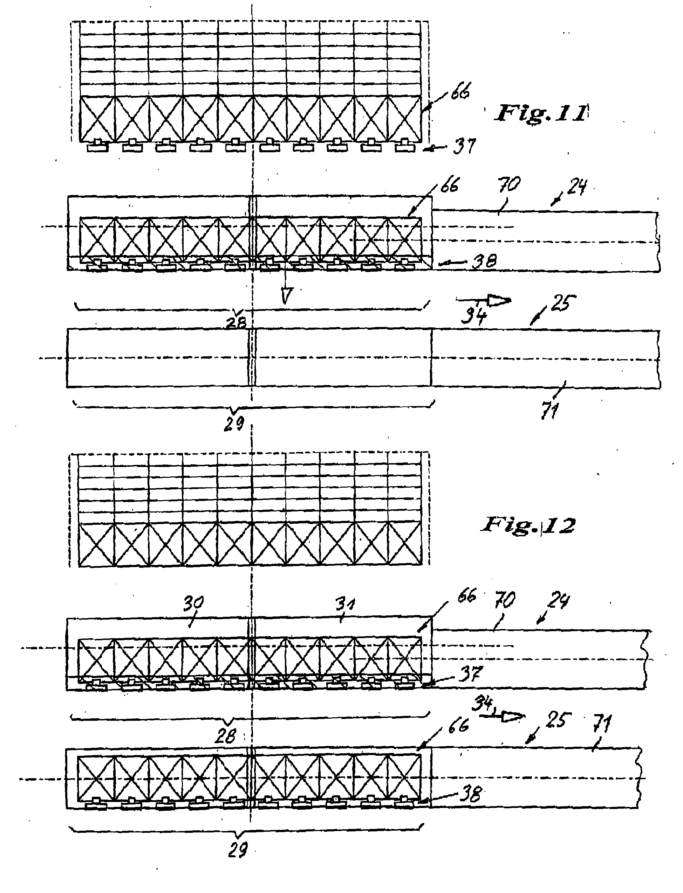

Die Figuren 8 und 10 zeigen im Sinne des Verfahrens nach der Erfindung die Arbeitsweise, wenn eine Abtransportstörung im Bereich der ersten Abtransportförderstrecke 24 aufgetreten ist. Auch in diesem Falle wird die gesamte Stapelreihe 66 vom ersten Übergabeförderer 37 auf die Teilförderer 30, 31, 30a, 31a des Übergabebereichs 28 der ersten Abtransportförderstrecke 24 gezogen und dort zwischengelagert (Fig. 9 und 10). Danach holt der zweite Übergabeförderer 38 die gesamte Stapelreihe 66 von dort ab und zieht sie auf die zweite Abtransportförderstrecke 25 bzw. deren Übergabebereich 29 (Fig. 11 und 12), von wo sie dann durch Ingangsetzen des gesamten Stranges der zweiten Abtransportförderstrecke 25 auf das zugehörige Förderband 71 transportiert wird. Auch hier ist zu erkennen, dass durch die gleichsinnige Arbeitsweise der beiden Übergabeförderer schon die nächste Gesamtstapelreihe 66 in der Zwischenablage auf dem Übergabebereich 28 liegt, während die Förderbänder 32, 33 die Stapel im Eilgang nach rechts (Abtransportrichtung 34) abtransportieren, um sie den vorauslaufenden anzuschließen (Fig. 13).

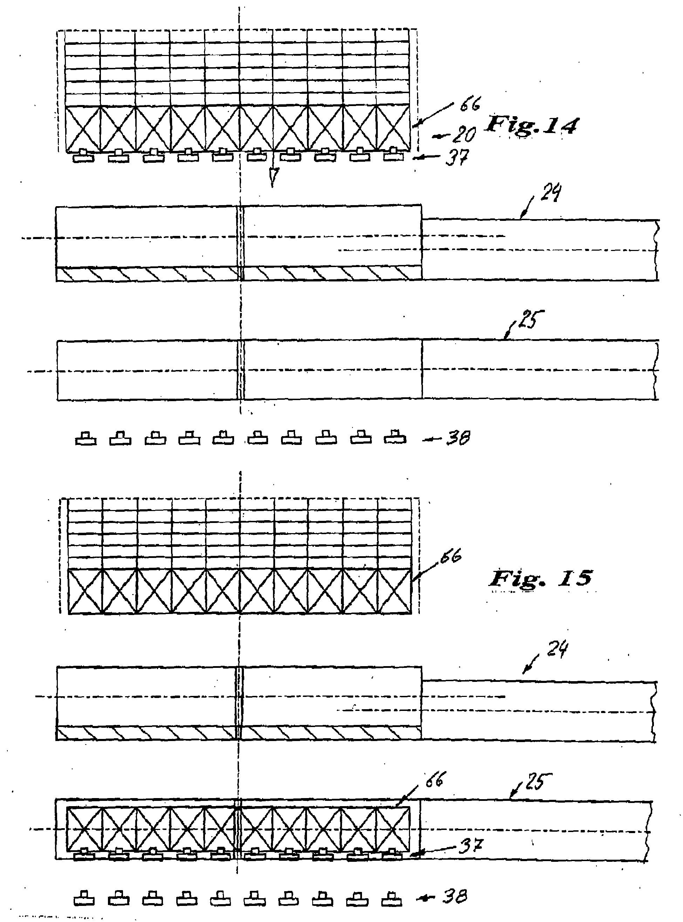

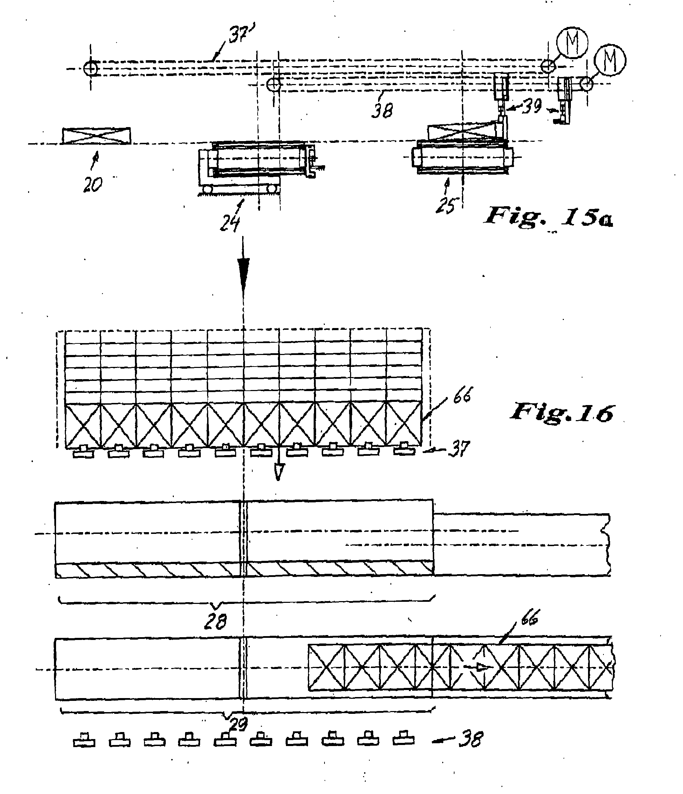

Fig. 14 bis 16 zeigen die Arbeitsweise einer Fördereinrichtung, die in allen Einzelheiten der bisher behandelten entspricht, wobei jedoch lediglich der erste Übergabeförderer 37' eine längere Laufbahn hat, so dass seine in einer Reihe nebeneinander stehenden Greifer 39 von der Stapelposition 21 bis zur zweiten Übergabeposition 29 auf der zweiten Abtransportförderstrecke 25 reicht. Mit ihr wird im Normalbetrieb genau gearbeitet, wie anhand des in den Fig. 1 bis 8 beschriebenen. Lediglich bei der ausschließlichen Beschickung der zweiten Abtransportförderstrecke 25 kann die gesamte Stapelreihe 66 ohne einen Greiferwechsel über den Übergabebereich 28 hinweg in den Übergabebereich 29 transferiert werden. Hier findet bei diesem Störungsfall keine Zwischenablage der gesamten Stapelreihe statt. Bei dem Twin-Betrieb wird jedoch mit Zwischenablage und Greiferwechsel im Bereich der ersten, der Stapelposition näheren Übergabeposition 28 gearbeitet.

Es ist zu erkennen, dass die Erfindung es nicht nur ermöglicht, bei Stockungen auf einer der beiden Abtransportförderstrecken 24, 25 (Querförderer) jeweils die Gesamtproduktion der Maschine auf die verbleibende Förderstrecke zu konzentrieren, sondern auch bei Reparaturen an einer der Förderstrecken oder am zweiten Querförderer dies ohne Maschinenstop zu gewährleisten. Es ist aber auch möglich, eine mit nur einem Querförderer und einem Übergabeförderer ausgerüstete Maschine unter Verwendung von im wesentlichen gleichen Bauelementen (Übergabeförderer und große Teile des Querförderers) auf eine Twin-Lösung im Baukastensystem nachzurüsten. Trotz der zwei Querförderer, die einen Teil der Stapelreihe nach Art einer Eimerkette nacheinander fassen, ist die Geschwindigkeit nicht reduziert, weil bei den Greifern jeweils der untere Zangenfinger so hoch anhebbar ist, dass der Querförderer schon wieder in die Abholposition gefahren werden kann, bevor die Stapel abgeräumt sind.

### Beschreibung eines weiteren bevorzugten Ausführungsbeispiels

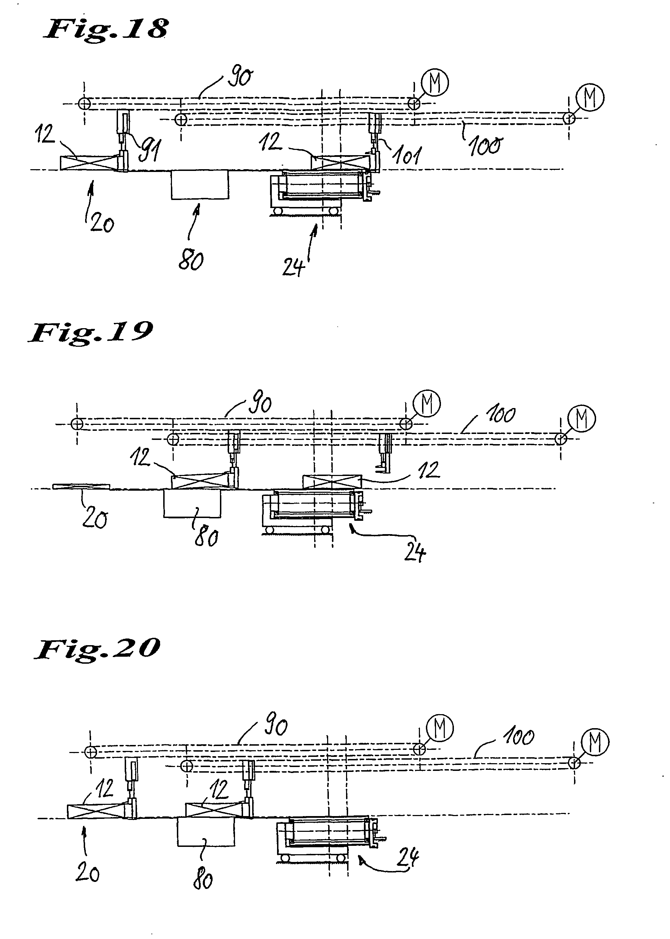

Anhand der Fig. 18 bis 20 und 21a bis 21f wird ein weiteres Ausführungsbeispiel einer Fördereinrichtung beschrieben, dessen grundsätzlicher Aufbau dem zuvor beschriebenen Ausführungsbeispiel bis auf die nachfolgend aufgeführten Unterschiede entspricht. Auch die grundsätzliche Verfahrensweise entspricht der zuvor bereits beschriebenen Verfahrensweise, so dass auch diesbezüglich nachfolgend lediglich noch auf die Unterschiede eingegangen wird.

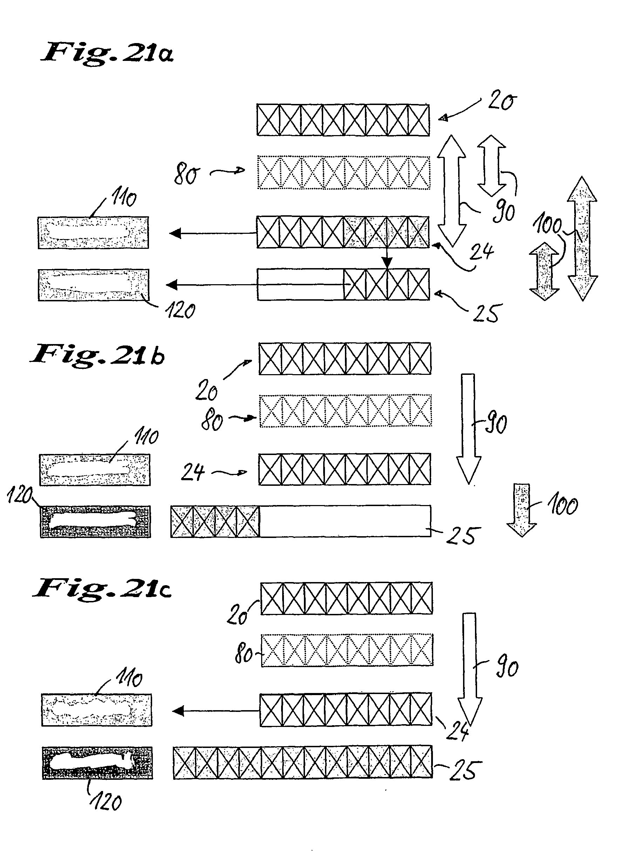

Wesentlicher Unterschied der Ausführungsform nach den Fig. 18 bis 21f ist es, dass bei dieser Ausführungsform zwischen der Antransportstation 20, die auch als Sammelstation bezeichnet wird, und der ersten Abtransportförderstrecke 24 eine Zwischenablagestation 80 vorgesehen ist. Wie anhand der Fig. 21a bis 21f erkennbar ist, erstreckt sich die Zwischenablagestation 80 über die gesamte Nutzenbreite, so dass sie bei der hier vorliegenden achtnutzigen Anlage einen Großtakt von acht nebeneinander liegenden Riesen 12 lagern kann.

Auch bei dieser Ausführungsform sind zwei Übergabeförderer 90, 100 vorgesehen, wobei sich der erste Übergabeförderer 90 von der Sammelstation 20 bis über die erste Abtransportförderstrecke 24 erstreckt. Der zweite Übergabeförderer 100 setzt gegenüber der zuvor beschriebenen Ausführungsform - in Förderrichtung gesehen - weiter hinten an und erstreckt sich bis über die zweite Abtransportförderstrecke 25 in Förderrichtung der Übergabestation. Die größere Erstreckung des Übergabeförderers 100 beruht darauf, dass dieser bereits oberhalb der Zwischenablagestation 80 positioniert ist, um mittels seiner Greifanordnung 101 Riese von der Zwischenablagestation 80 zu der ersten Abtransportförderstrecke 24 oder zu der zweiten Abtransportförderstrecke 25 fördern zu können. Der erste Übergabeförderer 90 ist mit einer Greifanordnung 91 versehen, die Riese 12 von der Sammelstation 20 zu der Zwischenablagestation 80 und zu der ersten Abtransportförderstrecke 24 fördern kann. Die Ausbildung der Greifanordnung 91, 101 sowie die Gestaltung der Übergabeförderer 90 und 100 entspricht im übrigen der zuvor beschriebenen Ausführungsform. Gleiches gilt für Aufbau und Gestaltung der Sammelstation 20 und der Abtransportförderstrecken 24. In den Fig. 21a bis 21f sind mit den weißen Pfeilen entsprechende Bewegungsfunktionen des Übergabeförderers 90 und mit den grauen Pfeilen entsprechende Bewegungsfunktionen des Übergabeförderers 100 dargestellt.

Wie anhand der Darstellungen gemäß den Fig. 18 bis 21f erkennbar ist, kann ein Großtakt an Riesen, der an der Sammelstation 20 aufgelaufen ist, zwischenzeitlich an der Zwischenablagestation 80 abgelegt werden. Dadurch ist es möglich, den eigentlich synchronen Ablauf zwischen der Förderung dieses Großtaktes durch den Übergabeförderer 90 und die Querförderfunktion der Abtransportförderstrecke 24 zu einer Packlinie 110 aufzutrennen. Die Zwischenablagestation 80 ist insbesondere vorteilhaft, falls eine der beiden Packlinien 110, 120 zeitweise ausfällt. Denn um bei Ausfall einer Packlinie 110 oder 120 einen entsprechenden Großtakt an Riesen auf der verbleibenden, intakten Packlinie 110, 120 zu fördern und zu verpacken, muss die Packlinie 110, 120 auf die doppelte Kapazität hochgefahren werden. Hierzu benötigt die Packlinie verständlicherweise Zeit, so dass in dieser Zeit ein weiterer Großtakt an der Sammelstation 20 gesammelt wird, der noch nicht auf die Abtransportförderstrecke 24, 25 übergeben werden kann. Durch die Schaffung der Zwischenablagestation kann dieses Problem beseitigt werden. Denn der entsprechende Großtakt, der an der Sammelstation 20 aufgelaufen ist, kann mittels eines einzigen Fördervorganges durch den Übergabeförderer 90 von der Sammelstation 20 auf die Zwischenablagestation 80 überführt werden. Anschließend kann der Großtakt mittels des Übergabeförderers 100 zu der Abtransportförderstrecke 24 gebracht werden. Damit ist die Zwischenablagestation 80 wieder frei, um einen erneuten Großtakt der Sammelstation 20 aufnehmen zu können. Von dem auf der Abtransportförderstrecke 24 befindlichen Großtakt kann die - in Querabförderung zur Packlinie 110 gesehen - hintere Großtakthälfte mittels des Übergabeförderers 100 weiter zu der zweiten Abtransportförderstrecke 25 gebracht werden. Die Abtransportförderstrecke 24 ist somit bereits nach der Hälfte der Zeit wieder frei, da lediglich die vordere Hälfte des Großtaktes zur Packlinie 110 gefördert werden muss. Auf diese Abtransportförderstrecke 24 kann somit bereits ein weiterer, auf der Zwischenablagestation 80 abgelegter Großtakt an Riesen gebracht werden, so dass auch die Zwischenablagestation 80 erneut frei ist.

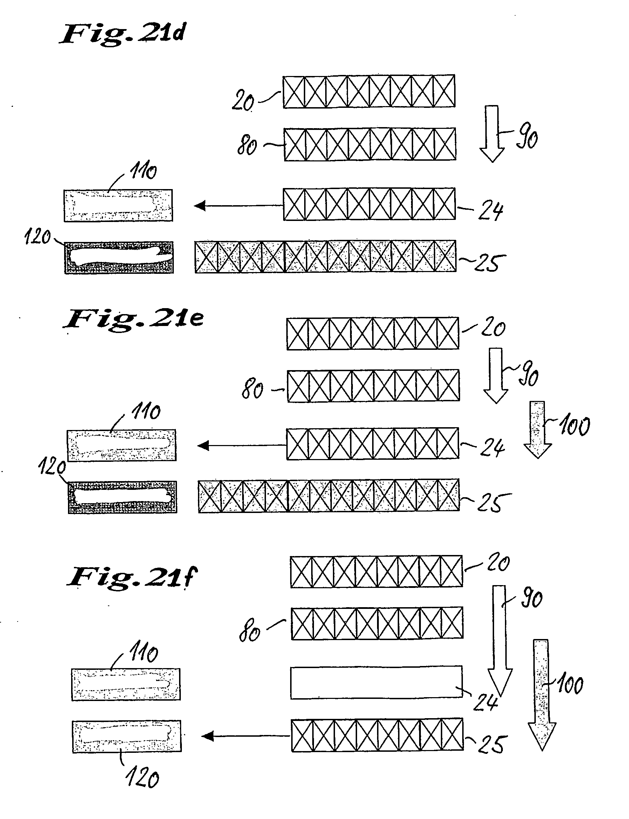

Wie anhand der Fig. 21a bis 21f erkennbar ist, wird die Zwischenablagestation 80 nach Möglichkeit durch den Übergabeförderer 90 überbrückt, sobald die Abtransportförderstrecke 24 frei ist. Erst wenn diese erste Abtransportförderstrecke 24 noch belegt ist, wird ein entsprechender Großtakt vorübergehend auf der Zwischenablagestation 80 abgelegt. Im übrigen sind die verschiedenen Bewegungsfunktionen und Verfahrensschritte anhand der Darstellungen in den Fig. 21a bis 21f verdeutlicht. In den Fig. 21 b bis 21 e sind die beiden Packlinien 110, 120 unterschiedlich grau schattiert. Diese unterschiedliche Schattierung soll die Phase verdeutlichen, in der die beiden Packlinien 110, 120 unterschiedlich schnell laufen und demzufolge unterschiedliche Kapazitäten haben.

## Patentansprüche

1. Fördereinrichtung für durch Blattlagen gebildete Stapel (12) aus Papier oder dgl. mit
1.1 einer Antransportstation (22), in der mehrere Stapel (12) in einer Stapelreihe (66) in nebeneinanderliegenden Stapelpositionen (21) zur Übergabe bereitgestellt werden,
1.2 einem Abtransportförderer (23), der wenigstens zwei in wenigstens einer Abtransportrichtung (34) fördernde, im wesentlichen quer zu einer Übergaberichtung (36) verlaufende erste und zweite Abtransportförderstrecken (24, 25) aufweist,
1.3 einer Übergabestation (27), in die der Abtransportförderer (23) teilweise hineinreicht und die Übergabepositionen (28, 29) auf jeder der Abtransport-Förderstrecken (24, 25) aufweist,
1.4 und mit wenigstens einem Übergabeförderer mit Greifern (39), die zum Ergreifen und Freigeben der Stapel (12) betätigbar sind und in der Übergaberichtung (36) bewegbar sind,
**dadurch gekennzeichnet, dass**
1.5 zwei gesonderte Übergabeförderer (37, 38) vorgesehen sind,
1.6 von denen der erste (37) von der Antransportstation (22) zumindest bis zur dieser näheren ersten Abtransportförderstrecke (24) reicht und
1.7 der zweite Übergabeförderer (38) von der ersten zur zweiten Abtransportförderstrecke (24, 25) reicht,
1.8 wobei jeder Übergabeförderer (37, 38) Greifer (39) für alle Stapelpositionen (21) aufweist und
1.9 der zweite Übergabeförderer (38) zum Ergreifen von auf der ersten Abtransportförderstrecke (24) zwischen-abgelegten Stapeln (66a) und zu deren Weitertransport auf die zweite Abtransportförderstrecke (25) ausgebildet ist.

2. Fördereinrichtung nach Anspruch 1, **dadurch gekennzeichnet, dass** die erste Abtransportförderstrecke (24) einen absenkbaren Bereich (30a, 31 a) aufweist, in dem die Stapel (12) zum Ergreifen auch ihrer Unterseite durch die Greifer (39) frei sind.

3. Fördereinrichtung nach Anspruch 2, **dadurch gekennzeichnet, dass** die erste Abtransportförderstation (24) wenigstens ein Haupt-förderband (30, 31) zur Auflage des größten Flächenteils der Stapel (12) und wenigstens ein demgegenüber periodisch absenkbares Nebenförderband (30a, 31a) aufweist, das den absenkbaren Bereich bildet.

4. Fördereinrichtung nach einem der vorhergehenden Ansprüche, **dadurch gekennzeichnet, dass** die erste, vorzugsweise beide Abtransportförderstrecken (24, 25) in ihren Übergabepositionen (28, 29) aus je zwei gesondert antreibbaren Teilförderstrecken (30 bis 33) bestehen.

5. Fördereinrichtung nach einem der vorhergehenden Ansprüche, **dadurch gekennzeichnet, dass** die Greifer (39) zumindest des ersten Übergabeförderers (37) so hoch verfahrbar sind, dass sie über die auf der Übergabeposition (28) der ersten Abtransportförderstrecke (24) abgelegten Stapel (12) hinweg zur Antransportstation (22) zurückverfahrbar sind.

6. Fördereinrichtung nach einem der vorhergehenden Ansprüche, **dadurch gekennzeichnet, dass** beide Abtransportförderstrecken (24, 25) parallel zueinander in gleiche Richtung (34) verlaufen.

7. Fördereinrichtung nach einem der vorhergehenden Ansprüche, **dadurch gekennzeichnet, dass** wesentliche Bauteile, insbesondere die beiden Übergabeförderer, im wesentlichen gleich ausgebildet sind und somit die Fördereinrichtung baukastenartig aufbaubar ist.

8. Fördereinrichtung nach einem der vorhergehenden Ansprüche, **dadurch gekennzeichnet, dass** zwischen der Antransportstation (20) und der Abtransportförderstrecke (24) und/oder zwischen zwei benachbarten Abtransportförderstrecken (24, 25) wenigstens eine Zwischenablagestation (80) vorgesehen ist, an der ein oder mehrere Stapel (12) zwischenlagerbar sind.

9. Fördereinrichtung für durch Blattlagen gebildete Stapel aus Papier oder dergleichen, mit
9.1. einer Antransportstation (20), in der mehrere Stapel (12) in einer Stapelreihe in nebeneinander liegenden Stapelpositionen zur Übergabe bereitgestellt werden,
9.2. mit einem Abtransportförderer, der wenigstens zwei im Wesentlichen quer zu einer Obergaberichtung verlaufende Abtransporttörderstrecken (24, 25) aufweist,
9.3 mit einer Übergabestation, die Übergabepositionen (28, 29) an **jeder der Abtransport-Förderstrecken** (24, 25) aufweist,
9.4 sowie mit wenigstens einem Übergabeförderer (90, 100) mit Greifern (91, 101), die zum Ergreifen und Freigeben der Stapel betätigbar sind und in einer **der** Übergabestationen bewegbar sind, **dadurch gekennzeichnet, dass**
zwischen der Antransportstation (20) und der **ersten** Abtransportförderstrecke (24) wenigstens eine Zwischenablagestation (80) vorgesehen ist, an der ein oder mehrere Stapel (12) zwischenlagerbar sind, und dass zwei übergabeförderer (90, 100) vorgesehen sind, wobei sich der erste Übergabeförderer (90) von der Antransportstation (22) bis über die erste Abtransportförderstrecke (24) und der zweite Übergabeförderer (100) in Förderrichtung der Übergabestation von der **Zwischenablagestation (80)** bis über die zweite Abtransportförderstrecke (25) erstreckt."

10. Verfahren zur Überführung von durch Blattlagen gebildete Stapel (12) aus Papier oder dgl.
10.1 zwischen einer Antransportstation (22), in der mehrere Stapel (12) in einer Stapelreihe (66) in nebeneinander liegenden Stapelpositionen (21) zur Übergabe bereitgestellt werden und
10.2 einem Abtransportförderer (23), der wenigstens zwei in wenigstens einer Abtransportrichtung (34) fördernde, im wesentlichen quer zu einer Übergaberichtung (36) verlaufende erste und zweite Abtransportförderstrecken (27, 25) aufweist,
10.3 wobei in einer Übergabestation (27), in die der Abtransportförderer (23) teilweise hineinreicht, und
10.4 die Übergabepositionen (28, 29) auf jeder der Abtransport-Förderstrecken (24, 25) aufweist,
10.5 mittels Übergabeförderung mit Greifern (39), die zum Ergreifen und Freigeben der Stapel betätigt werden und in einer Übergaberichtung (36) zwischen der Antransportstation (22) und der Übergabestation (27) bewegt werden, die ergriffenen und quer transportierten Stapel (12) dort abgelegt werden,
**dadurch gekennzeichnet, dass**
10.6 zumindest eine Teilstapelreihe (66a) einer Gesamtstapelreihe (66) nach ihrem Transport von der Antransportstation (22) zur Übergabeposition (28) auf der ersten Abtransportförderstrecke (24) zuerst auf dieser abgelegt und
10.7 anschließend erneut ergriffen und von dort zur Übergabeposition (29) auf der zweiten Abtransportförderstrecke (25) transportiert wird.

11. Verfahren nach Anspruch 10, **dadurch gekennzeichnet, dass** die Teilstapelreihe (66a) etwa die Hälfte einer Gesamtstapelreihe (66) ist.

12. Verfahren nach einem der Ansprüche 10 oder 11, **dadurch gekennzeichnet, dass** die in der Übergabepostion (28) der ersten Abtransportförderstrecke (24) abgelegten Stapel (12) mit einer Kante (45), vorzugsweise der in Übergabetransportrichtung (36) weisenden Kante, zum Ergreifen mit einem Greifer (39) über ein Haupt-förderband (30, 31), ggf. nach Absenkung eines Nebenförderbandes (30a, 31 a) überstehend abgelegt werden.

13. Verfahren nach einem der Ansprüche 10 bis 12, **dadurch gekennzeichnet, dass** wahlweise
13.1 nur ein Teilstapel (66a) einer Gesamtstapelreihe (66) auf der Übergabeposition (28) der ersten Abtransportförderstrecke (24) abgelegt und auf dieser abtransportiert wird oder
13.2 die gesamte Stapelreihe (66) auf der ersten Abtransportförderstrecke (24) abtransportiert wird oder
13.3 dass die gesamte Stapelreihe (66) nach ihrer Zwischenablage in der Übergabeposition (28) der ersten Abtransportförderstrecke (24) von dem zweiten Übergabeförderer (38) ergriffen und in die Übergabeposition (29) der zweiten Abtransportförderstrecke (25) transportiert wird.

## Claims

1. Conveying system for stacks (12) of paper or the like formed by sheet layers, comprising 1.1 a feed transport station (22), in which a plurality of stacks (12) are provided for transfer purposes in a stack row (66) in mutually adjacent stack positions (21),
1.2 a removal conveyor (23), which has at least two first and second removal conveying sections (24, 25) which convey in at least one removal direction (34) and run substantially transversely to a transfer direction (36),
1.3 a transfer station (27), into which the removal conveyor (23) partially reaches and which has transfer positions (28, 29) on each of the removal conveying sections (24, 25),
1.4 and comprising at least one transfer conveyor having grabs (39), which can be actuated to grab and release the stacks (12) and are movable in the transfer direction (36),
**characterized in that**
1.5 two separate transfer conveyors (37, 38) are provided,
1.6 of which the first (37) reaches from the feed transport station (22) to the first removal conveying section (24) situated closer to the said feed transport station, and
1.7 the second transfer conveyor (38) reaches from the first to the second removal conveying section (24, 25),
1.8 wherein each transfer conveyor (37, 38) has grabs (39) for all stack positions (21), and
1.9 the second transfer conveyor (38) is configured to grab stacks (66a) temporarily deposited on the first removal conveying section (24) and to forward these onto the second removal conveying section (25).

2. Conveying system according to Claim 1, **characterized in that** the first removal conveying section (24) has a lowerable region (30a, 31a), in which the stacks (12) are free to be grabbed on their bottom side by the grabs (39).

3. Conveying system according to Claim 2, **characterized in that** the first removal conveying station (24) has at least one main conveyor belt (30, 31) for supporting the largest surface part of the stacks (12), and at least one secondary conveyor belt (30a, 31a), which is periodically lowerable in relation to the said main conveyor belt and forms the lowerable region.

4. Conveying system according to one of the preceding claims, **characterized in that** the first, preferably both removal conveying sections (24, 25) in their transfer positions (28, 29) consist in each case of two separately drivable sub-conveying sections (30 to 33).

5. Conveying system according to one of the preceding claims, **characterized in that** the grabs (39) at least of the first transfer conveyor (37) can be moved to such a height that they can be moved over the stacks (12) deposited on the transfer position (28) of the first removal conveying section (24) back to the feed transport station (22).

6. Conveying system according to one of the preceding claims, **characterized in that** both removal conveying sections (24, 25) run parallel to each other in the same direction (34).

7. Conveying system according to one of the preceding claims, **characterized in that** fundamental components, in particular the two transfer conveyors, are of substantially the same configuration and the conveying system can thus be built up modularly.

8. Conveying system according to one of the preceding claims, **characterized in that** between the feed transport station (22) and the removal conveying section (24), and/or between two adjacent removal conveying sections (24, 25), there is provided at least one interim depositing station (80), at which one or more stacks (12) can be temporarily stored.

9. Conveying system for stacks of paper or the like formed by sheet layers, comprising
9.1 a feed transport station (22), in which a plurality of stacks (12) are provided for transfer purposes in a stack row in mutually adjacent stack positions,
9.2 comprising a removal conveyor, which has at least two removal conveying sections (24, 25) running substantially transversely to a transfer direction,
9.3 comprising a transfer station, which has transfer positions (28, 29) on each of the removal conveying sections (24, 25),
9.4 and comprising at least one transfer conveyor (90, 100), having grabs (91, 101) which can be actuated to grab and release the stacks and in one of the transfer stations are movable,
**characterized in that**
between the feed transport station (22) and the first removal conveying section (24) there is provided at least one interim depositing station (80), at which one or more stacks (12) can be temporarily stored, and **in that** two transfer conveyors (90, 100) are provided, wherein the first transfer conveyor (90) extends from the feed transport station (22) to over the first removal conveying section (24), and the second transfer conveyor (100) extends in the direction of conveyance of the transfer station from the interim depositing station (80) to over the second removal conveying section (25).

10. Method for transferring stacks (12) of paper or the like formed by sheet layers
10.1 between a feed transport station (22), in which a plurality of stacks (12) are provided for transfer purposes in a stack row (66) in mutually adjacent stack positions (21),
10.2 a removal conveyor (23), which has at least two first and second removal conveying sections (24, 25) which convey in at least one removal direction (34) and run substantially transversely to a transfer direction (36),
10.3 wherein in a transfer station (27), into which the removal conveyor (23) partially reaches, and
10.4 which has transfer positions (28, 29) on each of the removal conveying sections (24, 25),
10.5 by means of transfer conveyance with grabs (39), which are actuated to grab and release the stacks and are moved in a transfer direction (36) between the feed transport station (22) and the transfer station (27), the grabbed and transversely transported stacks (12) are deposited there,
**characterized in that**
10.6 at least a partial stack row (66a) of a total stack row (66), following its transport from the feed transport station (22) to the transfer position (28) on the first removal conveying section (24), is first deposited on the latter and
10.7 is then grabbed again and transported from there to the transfer position (29) on the second removal conveying section (25).

11. Method according to Claim 10, **characterized in that** the partial stack row (66a) is around half of a total stack row (66).

12. Method according to one of Claims 10 or 11, **characterized in that** the stacks (12) deposited in the transfer position (28) of the first removal conveying section (24) are deposited, if need be after lowering of a secondary conveyor belt (30a, 31a), such that they protrude with one edge (45), preferably with the edge pointing in the transfer transport direction (36), over a main conveyor belt (30, 31) in order to be grabbed with a grab (39).

13. Method according to one of Claims 10 to 12, **characterized in that**, according to choice
13.1 only a partial stack (66a) of a total stack row (66) is deposited on the transfer position (28) of the first removal conveying section (24) and is transported away on the latter, or
13.2 the total stack row (66) is transported away on the first removal conveying section (24), or
13.3 **in that** the total stack row (66), following its interim storage in the transfer position (28) of the first removal conveying section (24), is grabbed by the second transfer conveyor (38) and is transported into the transfer position (29) of the second removal conveying section (25).

## Revendications

1. Dispositif de transport pour des piles (12) de papier ou similaire constituées de couches de feuilles, comprenant :
1.1 un poste d'alimentation (22) dans lequel plusieurs piles (12) sont préparées en vue du transfert dans une rangée de piles (66) dans des positions de piles juxtaposées (21),
1.2 un convoyeur d'enlèvement (23) qui présente au moins deux, une première et une deuxième, sections de convoyeur d'enlèvement (24, 25) transportant dans au moins une direction d'enlèvement (34), s'étendant essentiellement transversalement à une direction de transfert (36),
1.3 un poste de transfert (27) dans lequel le convoyeur d'enlèvement (23) entre en partie et qui présente des positions de transfert (28, 29) sur chaque section de convoyeur d'enlèvement (24, 25),
1.4 et au moins un convoyeur de transfert avec des dispositifs de préhension (39) qui peuvent être actionnés pour saisir et libérer les piles (12) et qui peuvent être déplacés dans la direction de transfert (36),
**caractérisé en ce que**
1.5 deux convoyeurs de transfert séparés (37, 38) sont prévus,
1.6 dont le premier (37) s'étend depuis le poste d'alimentation (22) au moins jusqu'à la première section de convoyeur d'enlèvement (24) la plus proche de celui-ci, et
1.7 le deuxième convoyeur de transport (38) s'étendant depuis la première jusqu'à la deuxième section de convoyeur d'enlèvement (24, 25),
1.8 chaque convoyeur de transfert (37, 38) présentant des dispositifs de préhension (39) pour toutes les positions des piles (21) et
1.9 le deuxième convoyeur de transfert (38) est réalisé pour saisir des piles (66a) entreposées temporairement sur la première section de convoyeur d'enlèvement (24) et pour effectuer leur transport subséquent à la deuxième section de convoyeur d'enlèvement (25).

2. Dispositif de transport selon la revendication 1, **caractérisé en ce que** la première section de convoyeur d'enlèvement (24) présente une région (30a, 31a) pouvant être abaissée, dans laquelle les piles (12) sont libres d'être saisies par leur côté inférieur par les dispositifs de préhension (39).

3. Dispositif de transport selon la revendication 2, **caractérisé en ce que** le premier poste de convoyeur d'enlèvement (24) présente au moins une bande transporteuse principale (30, 31) pour déposer la plus grande partie de la surface des piles (12) et au moins une bande transporteuse secondaire (30a, 31a) pouvant être abaissée périodiquement par rapport à celle-ci, qui forme la région pouvant être abaissée.

4. Dispositif de transport selon l'une quelconque des revendications précédentes, **caractérisé en ce que** la première, de préférence les deux sections de convoyeur d'enlèvement (24, 25) se composent dans leurs positions de transfert (28, 29) de deux sections de convoyeur partielles (30 à 33) pouvant être entraînées séparément.

5. Dispositif de transport selon l'une quelconque des revendications précédentes, **caractérisé en ce que** les dispositifs de préhension (39) d'au moins le premier convoyeur de transfert (37) peuvent être déplacés à une hauteur telle qu'ils puissent être ramenés en arrière au-delà des piles (12) déposées dans la position de transfert (28) de la première section de convoyeur d'enlèvement (24) jusqu'au poste d'alimentation (22).

6. Dispositif de transport selon l'une quelconque des revendications précédentes, **caractérisé en ce que** les deux sections de convoyeur d'enlèvement (24, 25) s'étendent parallèlement l'une à l'autre dans la même direction (34).

7. Dispositif de transport selon l'une quelconque des revendications précédentes, **caractérisé en ce que** des composants essentiels, en particulier les deux convoyeurs de transfert, sont réalisés sensiblement de manière identique et donc le dispositif de transport peut être assemblé de manière modulaire.

8. Dispositif de transport selon l'une quelconque des revendications précédentes, **caractérisé en ce qu'**entre le poste d'alimentation (22) et la section de convoyeur d'enlèvement (24) et/ou entre deux sections de convoyeur d'enlèvement (24, 25), est prévu au moins un poste d'entreposage temporaire (80) sur lequel peuvent être entreposées temporairement une ou plusieurs piles (12) .

9. Dispositif de transport pour des piles de papier ou similaire constituées de couches de feuilles, comprenant .
9.1 un poste d'alimentation (22) dans lequel plusieurs piles (12) sont préparées en vue du transfert dans une rangée de piles dans des positions de piles juxtaposées,
9.2 un convoyeur d'enlèvement qui présente au moins deux sections de convoyeur d'enlèvement (24, 25) s'étendant essentiellement transversalement à une direction de transfert,
9.3 un poste de transfert qui présente des positions de transfert (28, 29) sur chaque section de convoyeur d'enlèvement (24, 25),
9.4 et au moins un convoyeur de transfert (90, 100) avec des dispositifs de préhension (91, 101) qui peuvent être actionnés pour saisir et libérer les piles (12) et qui peuvent être déplacés dans l'un des postes de transfert,
**caractérisé en ce**
**qu'**entre le poste d'alimentation (22) et la première section de convoyeur d'enlèvement (24) est prévu au moins un poste d'entreposage temporaire (80), sur lequel une ou plusieurs piles (12) peuvent être entreposées temporairement, et en ce que deux convoyeurs de transfert (90, 100) sont prévus, le premier convoyeur de transfert (90) s'étendant depuis le poste d'alimentation (22) jusqu'au-dessus de la première section de convoyeur d'enlèvement (24) et le deuxième convoyeur de transfert (100) s'étendant dans la direction de transport du poste de transfert depuis le poste d'entreposage temporaire (80) jusqu'au-dessus de la deuxième section de convoyeur d'enlèvement (25).

10. Procédé de transfert de piles (12) de papier ou similaire constituées de couches de feuilles
10.1 entre un poste d'alimentation (22) dans lequel plusieurs piles (12) sont préparées en vue du transfert dans une rangée de piles (66) dans des positions de piles juxtaposées (21), et
10.2 un convoyeur d'enlèvement (23) qui présente au moins deux, une première et une deuxième, sections de convoyeur d'enlèvement (24, 25) transportant dans au moins une direction d'enlèvement (34), s'étendant essentiellement transversalement à une direction de transfert (36),
10.3 dans lequel, dans un poste de transfert (27), dans lequel le convoyeur d'enlèvement (23) s'engage partiellement, et
10.4 qui présente des positions de transfert (28, 29) sur chacune des sections de convoyeur d'enlèvement (24, 25),
10.5 les piles (12) saisies et transportées transversalement sont déposées au moyen d'un transport de transfert avec des dispositifs de préhension (39) qui sont actionnés pour saisir et libérer les piles et qui sont déplacés dans une direction de transfert (36) entre le poste d'alimentation (22) et le poste de transfert (27),
**caractérisé en ce que**
10.6 au moins une rangée de piles partielle (66a) d'une rangée de piles complète (66) est d'abord déposée sur la première section de convoyeur d'enlèvement (24) après son transport depuis le poste d'alimentation (22) jusqu'à la position de transfert (28) sur cette section de convoyeur d'enlèvement (24), et
10.7 ensuite est à nouveau saisie et transportée de là jusqu'à la position de transfert (29) sur la deuxième section de convoyeur d'enlèvement (25).

11. Procédé selon la revendication 10, **caractérisé en ce que** la rangée de piles partielle (66a) est approximativement la moitié d'une rangée de piles complète (66).

12. Procédé selon l'une quelconque des revendications 10 ou 11, **caractérisé en ce que** les piles (12) déposées dans une position de transfert (28) de la première section de convoyeur d'enlèvement (24) sont déposées de manière à dépasser avec une arête (45), de préférence l'arête tournée dans la direction de transport de transfert (36), au-delà d'une bande transporteuse principale (30, 31), en vue d'être saisies par un dispositif de préhension (39), éventuellement après un abaissement d'une bande transporteuse secondaire (30a, 31a).

13. Procédé selon l'une quelconque des revendications 10 à 12, **caractérisé en ce que**, de manière sélective,
13.1 seulement une pile partielle (66a) d'une rangée de piles complète (66) est déposée sur la position de transfert (28) de la première section de convoyeur d'enlèvement (24) et est enlevée sur celle-ci, ou
13.2 la rangée de piles complète (66) est enlevée sur la première section de convoyeur d'enlèvement (24) ou
13.3 **en ce que** la rangée de piles complète (66), après son entreposage temporaire dans la position de transfert (28) de la première section de convoyeur d'enlèvement (24) est saisie par le deuxième convoyeur de transfert (38) et est transportée dans la position de transfert (29) de la deuxième section de convoyeur d'enlèvement (25).
